# EUROPÄISCHE PATENTSCHRIFT

(11) **EP 1 223 031 B1**
(45) Veröffentlichungstag und Bekanntmachung des Hinweises auf die Patenterteilung: **15.09.2010**
(21) Anmeldenummer: 02000461.0
(22) Anmeldetag: 08.01.2002
(51) Int. Cl.: B32B 5/26, D21H 13/40, D04H 13/00, E04B 1/78

(54) **Dämmstoffelement aus Mineralwolle sowie Verfahren zu dessen Herstellung**
Mineral wool insulating element and process of fabrication
Elément d'isolation en laine minérale et procédé de fabrication

(30) Priorität: 09.01.2001 DE 10100640
(43) Veröffentlichungstag der Anmeldung: 17.07.2002
(73) Patentinhaber: SAINT-GOBAIN ISOVER G+H AG, 67059 Ludwigshafen (DE)
(72) Erfinder: Bihy, Lothar, 67657 Kaiserslautern (DE); Gröner, Wilhelm, 69198 Schriesheim (DE); Bugert, Karl-Hans, 68519 Viernheim (DE)
(74) Vertreter: Bockhorni & Kollegen

(56) Entgegenhaltungen:
- WO-A-98/13542
- WO-A-98/13642
- DE-A- 19 914 782
- GB-A- 2 107 371
- US-A- 2 868 684
- US-A- 4 433 020

## Beschreibung

Die Erfindung betrifft ein Dämmstoffelement aus Mineralwolle gemäß dem Oberbegriff des Patentanspruches 1 sowie ein Verfahren zur Herstellung desselben.

Die Herstellung von Mineralwolle-Dämmstoffelementen erfolgt in der Regel durch Auffangen von aus Spinndüsen austretenden Fasern auf einem Endlosförderband zur Bildung einer Fasermatte. Mit Aufbringen der Fasern auf dem Endlosförderband erfolgt auch eine Bindemittelzugabe, indem die aus den Spinndüsen austretenden Fasern mit Bindemittel besprüht werden. Als Bindemittel wird zumeist Phenolharz verwendet. Herstellungsbedingt infolge des Auffangens der Fasern auf dem umlaufenden Endlosförderband sind die Fasern im wesentlichen in Längsrichtung der Fasermatte und damit parallel zu beiden Hauptflächen des Dämmstoffelements ausgerichtet, liegen jedoch dreidimensional betrachtet in Wirrlage vor. Zur Bildung des Dämmstoffelements wird die mit Bindemittel versetzte Fasermatte zum Zwecke der Aushärtung des Bindemittels durch einen sogenannten Tunnelofen geführt, und zwar in aller Regel zwischen zwei Endlosförderbändern, die je aus aneinander angelenkten Gitterrosten gebildet sind, so dass zum Zwecke der Aushärtung Warmluft in Richtung auf und durch die Fasermatte geblasen werden kann. Je nach Größe der Rohdichte liegt z.B. bei Glaswolle das ausgehärtete und abgelängte Dämmstoffelement vielfach in Form von Mineralwolleplatten vor, üblicherweise bei Rohdichten bis 100 kg/m³, wobei diese Mineralwollplatten vor allem als Platten für hinterlüftete Fassaden, als Trittschalldämmplatten oder dergleichen verwendet werden. Für die Wärmedämmung von Steildächern oder dergleichen werden allerdings Dämmstoffbahnen verwendet, bei denen die Rohdichtewerte kleiner 40 kg/m³ liegen. Dadurch ist das Dämmstoffelement, also die Dämmstoffbahn, flexibel und kann mit Kompression zu einer Dämmstoffrolle aufgewickelt werden, was für Transport und Lagerung von Vorteil ist. In der Zwischensparrendämmung werden diese Dämmstoffbahnen unter Klemmdruck zwischen den Dachsparren eingebracht. Hierzu ist es bekannt (DE 36 12 857 C), eine Dämmstoffbahn mit beabstandeten quer zur Längsrichtung der Dämmstoffbahn verlaufenden Markierungen zu versehen, die als Schneidhilfslinien dienen. Für das Verlegen der Dämmstoffbahn wird hierbei der Abstand zwischen den Dachsparren ausgemessen, auf die Dämmstoffbahn übertragen und dann ein dem Dachsparrenabstand entsprechender Abschnitt von der Dämmstoffbahn unter Ausnutzung der Markierungslinien als Schnitthilfslinien abgeschnitten und dann quer zwischen den Dachsparren eingebaut. Das Abschneiden erfolgt hierbei mit Übermaß, so dass nach seitlichem Zusammendrücken des Dämmstoffabschnittes dieser nach Einsetzen zwischen den Dachsparren unter Klemmdruck gehalten ist. Alternativ werden auch mit Aluminiumfolie kaschierte Dämmstoffbahnen verwendet, bei denen die Aluminiumfolie beidrandig mit Überstand lappenartig vorsteht und die in Längsrichtung zwischen den Dachsparren eingebrachten Dämmstoffbahnen dann dadurch zwischen den Dachsparren gehalten werden, dass die seitlich vorstehenden Aluminiumstreifen mit den Dachsparren durch klammerartige Befestigungsmittel befestigt werden. Gegenüber dieser Verlegungsmethode zeichnet sich die erstgenannte Verlegung von mit Markierungslinien versehenen Dämmstoffbahnen dadurch aus, dass die Herstellung und Lagerhaltung von Dämmstoffbahnen mit fein abgestuften Nennbreiten entfällt und dass vor allem der bei der anderen Verlegemethode beim Einbau anfallende Verschnitt minimiert oder gänzlich vermieden wird.

Die Dämmstoffbahnen werden für Transport und Lagerung unter Kompression zu einer Rolle aufgewickelt und in einer Kunststoffhülle verpackt. Wenn vor Ort die Kunststofffolie zum Entpacken der Dämmstoffbahn entfernt wird, federt die Dämmstoffrolle zu einer langgestreckten Dämmstoffbahn auf, wobei die komprimierte Dämmstoffbahn zugleich auf ihre Nenndicke auffedert. Bei derartigen Mineralwolle-Dämmstoffelementen wird die äußere freiliegende Oberflächenschicht unmittelbar durch Mineralwolle-Fasern gebildet. Insbesondere bei Raumgewichten < 30 kg/m³ ist dabei die Oberflächenschicht dieser Dämmstoffbahnen sehr flexibel und gibt beim Anfassen federnd nach. Dabei kann der Verarbeiter bei einem festen Zugreifen des Mineralwolle-Dämmstoffelements eine leicht stechende Oberfläche empfinden, was unerwünscht ist. Dies kann infolge der Wirrlage der MineralwolleFasern innerhalb des Dämmstoffelements im Bereich der Oberflächenschicht auftreten, da auch ein Teil der Fasern mit ihren endseitigen Spitzen im Bereich der Oberfläche der beiden Hauptflächen der Dämmstoffbahn münden. Beim Greifen der Dämmstoffbahn drückt die Hand somit nicht nur die überwiegend längsgerichteten Fasern, sondern auch auf Faserspitzen, was bei festem Zugreifen als störend wahrgenommen werden kann.

Aufgabe der Erfindung ist es, ein Dämmstoffelement aus Mineralwolle, insbesondere eine Dämmstoffbahn so auszubilden, dass die Grifffreundlichkeit verbessert und damit das Handling der Dämmstoffelemente beim Einbau angenehmer wird. Dabei sollen durch die Weiterbildung keine Einbußen in der Qualität der Dämmstoffelemente hingenommen werden, vielmehr sollen die vorteilhaften Eigenschaften der Dämmstoffelemente für Transport, Lagerung und Einbau beibehalten bleiben. Auch wird angestrebt, dass durch die Maßnahmen zur Erhöhung der Grifffreundlichkeit das vertraute Erscheinungsbild der Dämmstoffelemente erhalten bleibt, welche durch die typische Färbung der Mineralwolle-Fasern und deren Erscheinungsbild aufgrund des Herstellungsvorganges geprägt sind, insbesondere durch die gelbliche oder gelblich/bräunliche Farbe, je nach Ausgangsprodukt. Dabei soll auch das geschmeidige, weiche Erscheinungsbild der Mineralwolle-Oberfläche beibehalten bleiben, die durch die längsverlaufenden Fasern bestimmt ist, weil dieses Erscheinungsbild dem Benutzer von seiner Optik her ein gutes Dämmstoffvermögen vermittelt. Ferner sollen im Falle eines Klemmfilzes für die Steildachdämmung die charakteristischen Markierungslinien vom Prinzip her erhalten bleiben.

Diese Aufgabe wird erfindungsgemäß durch die im kennzeichnenden Teil des Anspruchs 1 enthaltenen Merkmale gelöst, wobei ein geeignetes Herstellungsverfahren durch die Merkmale des Anspruchs 32 gekennzeichnet ist.

Vorteilhafte Weiterbildungen des Dämmstoffelements, insbesondere der Dämmstoffbahn, sowie des Herstellungsverfahrens sind durch die Merkmale in den Unteransprüchen gekennzeichnet.

Zur Lösung der obigen Aufgabenstellung sieht die Erfindung ein sehr dünnes, insbesondere filmdünnes Sperrschichtgebilde mit hautartigem Charakter und poröser Struktur vor, welches auf mindestens einer der Hauptflächen der Dämmstoffbahn bzw. des Dämmstoffelements aufgebracht und befestigt ist. Dieses Sperrschichtgebilde zeichnet sich durch seine hohe Flexibilität aus und ist so elastisch und geschmeidig ausgebildet, dass die Sperrschicht, wenn sie zerknittert wird, knitterfrei wieder ihre Ursprungsform einnimmt. Gleichzeitig wird durch die Sperrschicht das Verhalten der Mineralwollbahn nicht beeinträchtigt, jedoch das Griffverhalten und Griffempfinden sowie der optische Eindruck verbessert, da eine nach außen hin optisch geschlossene Fläche vermittelt wird und die Sperrschicht infolge ihrer Gestaltung ein Herauslösen von Fasern des Dämmstoffelements verhindert. Hierzu sind die Fasern der Sperrschicht fest gebunden, so dass sie sich auch bei Reibung nicht lösen. Hierzu ist die Sperrschicht aus einem Nassvliesstoff bzw. schlempenartigem Gebilde hergestellt, bei dem nach Aushärtung der Faser-Bindemittelverbund auch ein Aufspalten in Schichten verhindert. Bevorzugt ist die Schlempe aus gechoppten E-Glasfasern und Polyacrylat gebildet. Durch die flexible Ausbildung der Sperrschicht meint der Benutzer direkt beim Handling des Elements die Mineralwolle zu greifen, was aber nicht zutrifft, da die maßgebliche Hauptfläche des Elements von dieser Sperrschicht bedeckt ist. Eine Dämmstoffbahn mit einer solchen Sperrschicht ist bis auf die verbesserte Grifffreundlichkeit in der Handhabung völlig gleich einer Dämmstoffbahn ohne eine solche Sperrschicht, das heißt, die weiche Charakteristik der Dämmstoffbahn, die für den Gebraucher das Synonym des Dämmstoff vermögens darstellt, wird auch durch die erfindungsgemäß gestaltete Dämmstoffbahn vermittelt. Die Dämmstoffbahn lässt sich trotz Sperrschicht unverändert gut auch in winklige Anordnungen drücken, wobei sich im Falle eines Klemmfilzes das Klemmvermögen dadurch sogar noch vorteilhaft erhöht. Ferner lässt sich die Dämmstoffbahn auch unter hoher Kompression ohne irgendwelche Einbuße gut wickeln, und die Sperrschicht beeinträchtigt in keiner Weise, selbst wenn sie beidseitig vorgesehen ist. Das erforderliche Auffedern der Dämmstoffbahn nach Entfernung der Verpackung ist ebenfalls durch die Sperrschicht nicht beeinträchtigt. Da die Sperrschicht ferner auch überwiegend in ebener Netzwerkstruktur gestaltet ist, übergreift sie sozusagen die Fasern des Mineralwolle-Dämmstoffelements und verhindert ein mögliches Ablösen der Fasern beim Entrollen der Dämmstoffrolle, aber auch beim Greifen des Dämmstoffelements. Durch die fein ausgeprägte ebene Netzwerkstruktur scheint auch die Mineralwolle-Oberflächenschicht voll durch, so dass das äußere Erscheinungsbild des Dämmstoffelements durch die aufgebrachte Sperrschicht nicht versteckt wird, sondern weitgehend optisch erhalten bleiben kann. Dies ist sehr wesentlich, da durch die erfindungsgemäßen Maßnahmen das bewährte konventionelle Dämmstoffelement in seinen vorhandenen vorteilhaften Eigenschaften nicht verändert werden soll, man vielmehr nur eine grifffreundlichere Gestaltung wünscht, ohne dass dies von außen ohne weiteres zu erkennen wäre.

Die Dicke der Sperrschicht beträgt < 1 mm, insbesondere < 0,5 mm und bevorzugt < 0,2 mm, insbesondere 0,18 mm, was für die Flexibilität und Griffreundlichkeit vorteilhaft ist. Dadurch ergibt sich ein außerordentlich dünnes, etwa filmdünnes Gebilde in Art einer feinen haarnetzartigen Struktur, die eine Spezialschicht für die Mineralwollfasern des Dämmstoffelements gegen Ablösen der Fasern und Vorstechen von Faserspitzen bildet, jedoch gleichwohl, außerordentlich flexibel ist und das Rückstellvermögen der Dämmstoffbahn in keiner Weise beeinträchtigt, wie das erforderliche Auffedern der komprimierten Dämmstoffbahn nach dem Entwickeln auf die Nenndicke der Bahn. Zugleich schimmert aufgrund der foliendünnen Netzwerkstruktur die Dämmstoffbahn durch, so daß die dem Benutzer vertraute gelbliche oder gelblich/bräunliche Farbe der Mineralwollbahn optisch nicht versteckt wird. Zweckmäßiger Weise wird die Faserdichte pro Flächeneinheit der Sperrschicht im Sinne der Faserablösungssicherung auf die Faserlänge der Mineralwollfasern abgestellt. Sind die Mineralwollfasern länger, dann kann die Dichte der Netzwerkstruktur geringer sein als im Falle von kürzeren Mineralwollfasern.

Das Flächengewicht der Sperrschicht beträgt < 30 g/m² und dort zwar bevorzugt in dem Bereich von 14 g/m².

Dadurch, daß die Sperrschicht aus einer Schlempe oder Maische aus Bindemittel und gechoppten Fasern, der gegebenenfalls auch ein Weichmacher zugesetzt ist, durch Walzen und Ziehen über ein Sieb gebildet ist, lässt sich eine überwiegende Ausrichtung der wirr vorliegenden Faserschicht weitgehend in der Ebene der Sperrschicht mit überwiegender Tendenz einer Orientierung in Längsrichtung, also der Auswalzrichtung bei der Schichtherstellung, einstellen. Beim Ausziehen der Schlempe über ein Sieb tropft überschüssiges Bindemittel nach unten hin ab, wobei gewünscht ist, daß soviel Bindemittel zugegen bleibt, daß es zu einer räumlich-flächigen schwimmhautähnlichen Ausbildung von Bindemittelabschnitten im Bereich der Kreuzungspunkte der Fasern der Sperrschicht kommt, so daß die Fasern im Kreuzungsbereich mindestens zu einem großen Teil knotenblechartig durch Bindemittelflächen verbunden sind, was zu sehr hohen Zug- und Druckdehnungswerten führt.

Die Dichte der Fasern pro Flächeneinheit ist insgesamt gering, so daß die Sperrschicht zweckmäßiger Weise im wesentlichen transparent ist, also die Netzwerkstruktur der Sperrschicht das Aussehen der darunter liegenden Dämmstoffbahn im wesentlichen nicht versteckt. Der mittlere Faserdurchmesser im arithmetischen Mittel der Fasern der Sperrschicht liegt bevorzugt im Bereich von 7 bis 20 µm, bevorzugt im Bereich von 8 bis 14 µm. Das Flächengewicht der Fasern liegt zweckmäßiger Weise im Bereich von 1,7 bis 2,0, insbesondere von 1,85 bis 1,95 mg/cm². Das bevorzugte mittlere Fasergewicht liegt etwa im Bereich von 0,0007 bis 0,0011 und die Anzahl der Fasern pro Flächeneinheit/cm² liegt im Bereich von 2000 bis 2200 Fasern, insbesondere beträgt die Faseranzahl circa 2100.

Es ergibt sich hierbei eine netzwerkartig aufgebaute Sperrschicht, die sehr flexibel und anschmiegsam ist, was für das Touch-Verhalten, also die Grifffreundlichkeit maßgeblich ist, wobei die Sperrschicht vorteilhafterweise geschmeidig und elastischfedernd ist, dergestalt, daß etwa nach Zerknüllen der Sperrschicht unter Handdruck die Sperrschicht schließlich wieder in ihre ebene Ausgangslage zurückkehrt und zwar knitterfrei. Dies ermöglicht überhaupt erst, dass die Dämmstoffbahnen unter relativ hoher Kompression im Verhältnis z.B. 1:4 bis 1:6 gewickelt und danach innerhalb einer Kunststoffhülle verpackt über Wochen aufbewahrt werden können, da beim Entrollen der Dämmstoffrolle die insbesondere auf der inneren Hauptfläche angeordnete Sperrschicht dennoch knitterfrei vorliegt, was für das qualitative Erscheinungsbild der Dämmstoffbahn sehr wesentlich ist. Eine weitere Eigenschaft der erfindungsgemäßen Dämmstoffbahn bzw. des erfindungsgemäßen Dämmstoffelements besteht darin, daß diese in die Baustoffklasse A gemäß DIN 4102 fällt, d.h. als nicht brennbar eingestuft werden kann. Die Befestigung der Sperrschicht erfolgt zweckmäßigerweise durch deren Aufbringen auf die noch nicht ausgehärtete Dämmstoffbahn, wobei alternativ allerdings auch das Aufkaschieren der Sperrschicht nach dem Aushärten der Dämmstoffbahn möglich ist. Im ersten Fall erfolgt die Anbindung der Sperrschicht dann während der Aushärtung der Dämmstoffbahn innerhalb eines Aushärtofens und zwar gegebenenfalls alleine unter Ausnutzung des Bindemittels innerhalb des Mineralwollelementes während dessen Aushärtung, so daß es zu einer Oberflächenanbindung der Sperrschicht auf der Dämmstoffbahn kommt, wobei eine Zugabe eines weiteren Bindemittelanteils auch möglich ist.

Nachfolgend wird die Erfindung näher unter Bezugnahme auf die Figuren 1 bis 3 erläutert, wobei
Figur 1 eine teilweise geöffnete Dämmstoffrolle aus einer mit einer Sperrschicht versehenen Dämmstoffbahn zeigt,
Figur 2 eine Faserdickenverteilung einer bevorzugten Ausführungsform der erfindungsgemäßen Sperrschicht,
Figur 3 eine schematische Skizze der Verbindungsbereiche von Fasern der Sperrschicht zeigt und
Figur 4 eine Draufsicht auf eine Sperrschicht mit aufgedruckten unterschiedlichen Markierungslinien.

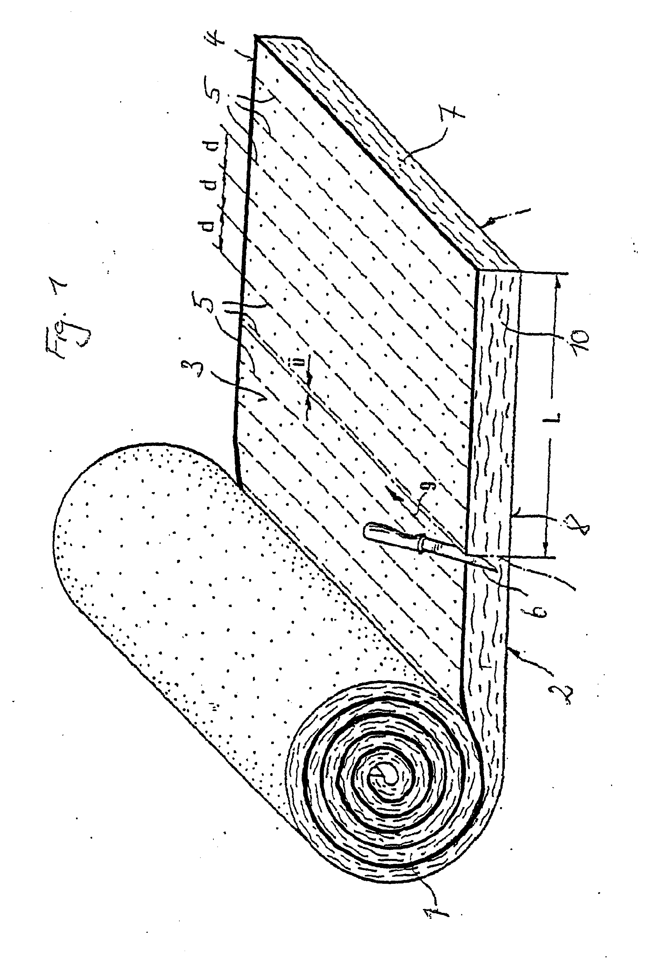

Figur 1 zeigt eine links im Wickel 1 und rechts in teilweise entrollter und gestreckter Stellung dargestellte Dämmstoffbahn 2, wie sie zur Steildachdämmung verwendet wird. Diese Dämmstoffbahn ist mit einer Sperrschicht 3 auf im Wickel innenliegenden Oberfläche der Dämmstoffbahn 2 versehen, welche eine der beiden Hauptflächen bildet. Die Sperrschicht 3 als filmdünne Schicht ist hier durch die fett ausgedruckte Linie 4 gekennzeichnet, die schematisch auch im Wickel 1 fortgesetzt ist, um die Anordnung der Sperrschicht 3 aufzuzeigen. Die Sperrschicht 3 ist in gleichbleibenden modularen Abständen d mit querverlaufenden Markierungslinien 5 bedruckt und zwar über die gesamte Länge der Dämmstoffbahn, die als Orientierungshilfe bzw. Schneidhilfe zum Abschneiden eines Längsabschnitts L von der Dämmstoffbahn dienen, wie schematisch durch ein Messer 6 angedeutet ist. Die Länge L des Abschnitts entspricht einem zuvor ausgemessenen Abstand zweier Sparren, zwischen denen der abgeschnittene Längsabschnitt unter Klemmdruck eingebaut wird, so daß er fest zwischen den Sparren sitzt. Insbesondere hierbei verhindert die Sperrschicht 3, dass beim Eindrücken eines Längsabschnitts L Faserbruch freigesetzt werden kann. Hierbei wird der Längsabschnitt L mit einem Übermaß Ü abgeschnitten, um den Klemmdruck des press zwischen den Sparren eingesetzten Längenabschnitts zu erzeugen. Zwar ist in der bevorzugten Darstellung der Dämmstoffbahn gemäß Figur 1 die Sperrschicht 3 nur an dem im Wickel innenliegenden (und in der gestreckten Darstellung in der Figur 1 oben liegenden) Hauptfläche vorgesehen, jedoch kann bei Bedarf die Sperrschicht auch an den Stirnflächen, wie der Stirnfläche 7, an der untenliegenden Hauptfläche 8 sowie an den beiden Längsrändern 10 der Dämmstoffbahn vorgesehen bzw. angebracht sein. Mit dem Bezugzeichen 9 ist die Schnittrichtung des Messers 6 schematisch bezeichnet.

Die Sperrschicht 3, deswegen auch nur die Darstellung durch die fettausgezogene Linie 4, weist nur geringe Dicke, etwa Folien- bzw. Filmdicke auf, wobei die Dicke im bevorzugten Ausführungsbeispiel etwa 0,18 mm beträgt. Die Sperrschicht 3 liegt in einer ebenen Netzwerkstruktur vor und übergreift etwa haarnetzartig die Hauptfläche der Dämmstoffbahn, so daß sie einerseits eine Sperrschicht für ein Austreten von Faserbruch bildet, der beim Einbau unter Klemmdruck der Längsabschnitte L möglicherweise entstehen kann, und andererseits dadurch das Handling in Form einer grifffreundlichen Oberfläche wesentlichen verbessert. Die Sperrschicht 3 weist hautähnlichen Charakter auf, was für die geringe Dicke im Vergleich zur Dämmstoffbahn mit beispielhaft einer Nenndicke von 100 mm und der Netzwerkstruktur aus überkreuz angeordneten Fasern bedingt ist, die durch Bindemittel in einem porösen Verbund zusammen gehalten sind. Die Sperrschicht ist hierbei in ihrer Flexibilität so ausgelegt, daß sie der Flexibilität der Dämmstoffbahn im wesentlichen angepasst ist, also das Verhalten der Dämmstoffbahn, etwa beim Wickeln unter Kompression aber auch beim Auffedern auf die Nenndicke beim Entrollen des Wickels nicht behindert. Da die Sperrschicht aufgrund der sehr dünnen Ausbildung im wesentlichen durchscheinend ist, wird die von der Sperrschicht belegte Oberfläche auch maßgeblich durch die Färbung der Mineralwolle der Dämmstoffbahn geprägt, so daß die Sperrschicht an sich als gesonderte Sperrschicht optisch nicht ohne weiteres wahrnehmbar ist. Allerdings kann dieser Effekt auch kompensiert werden, etwa durch entsprechende Einfärbung der Sperrschicht, etwa bei der Verwendung eines eingefärbten Weichmachers. Zweckmäßigerweise ist die Sperrschicht auch elastischfedernd, so dass sie auch bei einem Zerknüllen unter normalen Handdruck auch wieder knitterfrei in ihre Ausgangslage zurückkehrt, wodurch die Gewähr dadurch geboten ist, daß beim Ausrollen der Dämmstoffbahn auch die mit der Sperrschicht belegte Hauptfläche knitterfrei und damit qualitätsmäßig einwandfrei vorliegt. Die Sperrschicht hat aufgrund ihrer Ausbildung einen sehr weichen Griffcharakter und ist deswegen grifffreundlich, bringt beim Greifen aber einen gewissen Widerstand im Vergleich zu einer nicht mit einer Sperrschicht belegten Mineralwollfläche, was das Handling der Dämmstoffbahn in soweit erleichtert, als in Folge des festen Griffs beim Verlegen nicht mit Übervorsicht gehandhabt wird, was oftmals bei einer Dämmstoffbahn im Bereich <=40kg/m³ der Fall ist, wenn man direkt in die Mineralwollfasern der Dämmstoffbahn greift und meint, ein Zerreißen durch überfesten Griff verhindern zu müssen. Insbesondere bewirkt die Sperrschicht, dass diejenigen Fasern, die im Oberflächenbereich mit ihren endseitigen Spitzen hervortreten können, "unschädlich" gemacht werden, was die Grifffreundlichkeit hervorruft.

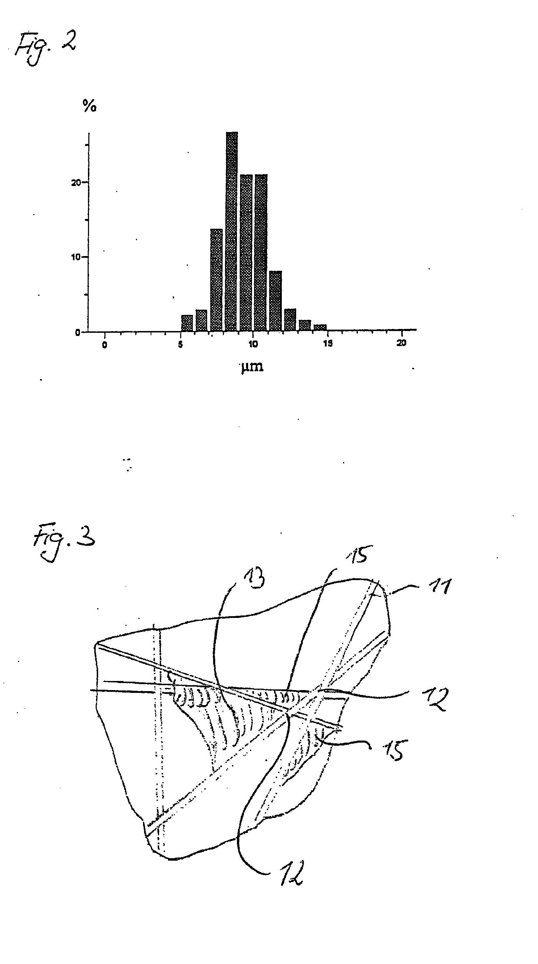

Die Sperrschicht 3 in der Ausführungsform nach Figur 1 ist aus gechoppten Textilfasern auf Glasbasis, insbesondere E-Glas, hergestellt, wobei Figur 2 eine vorteilhafte Verteilung der Faserdurchmesser einer Sperrschicht aufzeigt. Dabei beträgt das arithmetische Mittel des Faserdurchmessers 9,3 µm und das geometrische Mittel 9,2 µm. Der mittlere Faserdurchmesser liegt überwiegend im Bereich von 8,5 bis 9,5 µm wie Figur 2 zeigt. Das Fasergewicht beträgt etwa 0,0009 g und die Anzahl der Fasern pro Flächeneinheit cm² liegt bei etwa 2100. Die gechoppten Fasern sind über die gesamte Fläche gleichmäßig verteilt.

Die Herstellung dieser netzwerkartigen Sperrschicht 3 erfolgt analog der Papierherstellung, indem eine Schlempe oder Maische aus den gechoppten Fasern mit Bindemittel, hier Phenolharz gebildet wird, dem ein Weichmacher zur Grifffreundlichkeit, nämlich ein Tensid, zugesetzt ist. Der Anteil an Tensid beträgt etwa 0,2 % bezogen auf die Sperrschicht. Diese Schlempe oder Maische wird über ein Sieb gezogen, so daß überschüssiges Bindemittel abtropft, und durch Presswalzen geführt und damit zu einer filmdicken Schicht gezogen, deren Dicke im dargestellten Ausführungsbeispiel 0,18 mm beträgt. Durch diesen Herstellvorgang, also das Ziehen der Maische über ein Sieb und durch Presswalzen, ergibt sich eine überwiegend längsgerichtete Orientierung der Fasern innerhalb der Sperrschicht und deren Ausrichtung im wesentlichen in Sperrschichtebene. Dadurch ist die Zugkraftdehnung der Sperrschicht in Längsrichtung größer als in Querrichtung, wobei das Verhältnis etwa 3:2 beträgt. Im dargestellten Ausführungsbeispiel beträgt die maximale Zugkraft etwa 23 N/50 mm in Längsrichtung und in Querrichtung 15N/50 mm, wobei eine Höchstzugkraftdehnung in Längs- und in Querrichtung von 1 % angestrebt wird. Die Bindemittelaufnahme der Netzwerkstruktur aus den Fasern, die im Prinzip wirr verteilt vorliegen, beträgt etwa 160 g/m². Das Flächengewicht dieser Sperrschicht liegt bei 14 g/m².

Die dadurch poröse, etwa haarnetzartig strukturierte Sperrschicht klammert somit von oben die Hauptfläche der Dämmstoffbahn, so daß ein Ablösen der überwiegend in Längsrichtung der Dämmstoffbahn vorliegenden Mineralwollfasern der Dämmstoffbahn verhindert ist und auch ein Durchdringen von Faserspitzen der Dämmstoffbahn durch die Sperrschicht weitgehend verhindert wird, wodurch sich das weiche und angenehme Touch-Verhalten der Sperrschicht ergibt, die für das Handling gewünscht ist.

Das elastischfedernde Verhalten und die hohe Flexibilität der Sperrschicht 3 kann dadurch erreicht werden, daß im Bereich der Kreuzungspunkte der Fasern der Sperrschicht das Bindemittel flächig die Kreuzungsbereiche etwa in Art einer Schwimmhaut oder eines Knotenbleches übergreift, und die Fasern räumlich-flächig verbindet, wie aus Figur 3 schematisch hervorgeht. In Figur 3 sind mit 11 die Fasern der Sperrschicht mit 12 Kreuzungsbereiche der Fasern 11, und mit 13, 14 und 15 schwimmhautähnliche, sehr dünne Bindemittelbereiche bezeichnet. Hierbei erstrecken sich die Bindemittelbereiche 13 bis 15 räumlich, daß heißt, es können nicht nur zwei benachbarte und sich kreuzende Fasern sondern auch mehrere Fasern miteinander verbinden, wie links für den Bindemittelbereich 13 verdeutlicht ist. Es handelt sich hierbei um eine bevorzugte Ausführungsform der Bindemittelanordnung innerhalb der Netzwerkstruktur der Fasern 11. Je nach Menge des beigesetzten Bindemittels können die Bindemittelflächen größer oder kleiner sein.

Die aus Figur 1 ersichtlichen Markierungslinien sind auf der Sperrschicht vorgesehen, und zwar bevorzugt durch Bedrucken, wobei jedoch auch andere Ausführungsformen möglich sind. Bei Bedarf können die Markierungslinien auch unmittelbar auf der Dämmstoffbahnfläche aufgebracht sein, etwa über Heißluftdüsen, wobei die Markierungslinien dann durch die transparente Sperrschicht 3 hindurch scheinen.

Das im dargestellten Ausführungsbeispiel bevorzugt separat von der Dämmstoffbahn hergestellte Sperrschichtgebilde 3 kann nach dem Aushärten der Dämmstoffbahn auf die Dämmstoffbahn aufgebracht werden, wobei zweckmäßiger Weise die Sperrschicht mit der Dämmstoffbahn verklebt wird. Alternativ ist es auch gemäß der Erfindung möglich, dass die Sperrschicht vor dem Aushärtofen für die Dämmstoffbahn von einem Wickel abgezogen und auf die Dämmstoffbahn gelegt wird, so daß sie zusammen mit der Dämmstoffbahn den Aushärtofen durchläuft. Dann kann durch das einerseits in der Dämmstoffbahn vorhandene und andererseits durch gegebenenfalls ein zusätzliches Bindemittel das oberflächliche Ankleben der Sperrschicht 3 auf der Dämmstoffbahn 2 während des Aushärtvorgangs im Aushärtofen erfolgen.

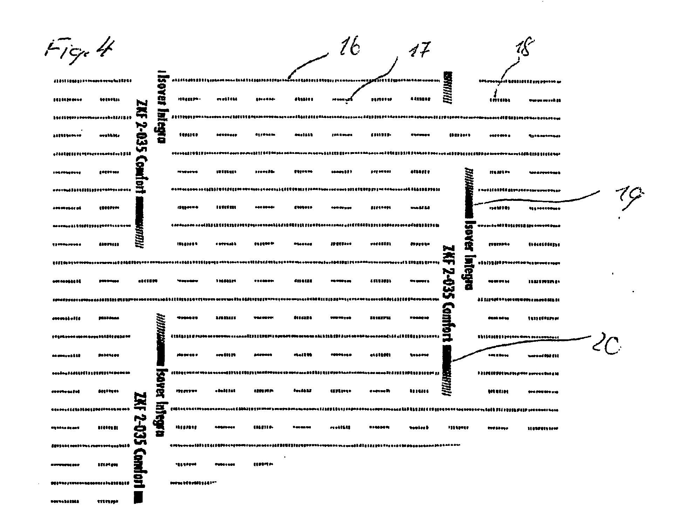

Fig. 4 zeigt die Draufsicht auf einen Abschnitt der erfindungsgemäßen Sperrschicht mit einem vorteilhaften Muster von Markierungslinien als Schnitthilfslinien. Danach sind in Längsrichtung der Sperrschicht bzw. des Dämmstoffelements, etwa der Dämmstoffbahn, auf die die Sperrschicht aufgebracht wird, Markierungslinien mit abwechselndem Muster angeordnet, nämlich Markierungslinien 16, die als durchgehende Markierungslinien gestaltet sind und sich senkrecht zur Längsrichtung erstrecken, und Markierungen 17, die als strichlierte Markierungslinien gebildet sind und sich ebenfalls quer erstrecken. Die Markierungslinien 16 und 17 sind abwechselnd zueinander und in gleichmäßigem Abstand zueinander und somit als modulare Markierungen angeordnet. Jede dieser Markierungslinien ist im dargestellten Ausführungsbeispiel durch eng beabstandete rasterartige Punkte 18 gebildet.

Darüber hinaus sind in vorteilhafter Weise zwecks Angabe des Herstellers und des Typs des Dämmstoffelements in Längsrichtung balkenartige Gebilde 19 und 20 vorgesehen, von denen ein balkenartiges Gebilde, nämlich das Gebilde 19, die Herstellerangabe und das andere balkenartige Gebilde, hier das Gebilde 20, die Typenbezeichnung enthalten kann. Auch diese balkenartigen Gebilde sind im dargestellten Ausführungsbeispiel modular, also mit Abstand zueinander über die Länge angeordnet. Durch dieses Muster aus längs und quer angeordneten Markierungen und die Gestaltung der längs verlaufenden Markierungen als Identifizierungskennzeichen werden auch optisch die quer gerichteten Markierungslinien als Schnitthilfslinien hervorgehoben, was für den Gebraucher der Dämmstoffelemente sehr zweckmäßig ist.

In vorteilhafter Weise werden für die Sperrschicht Fasern aus E-Glas verwendet, also Fasern mit einem definierten Durchmesser zwischen 12 und 20 µm und gebildet aus SiO₂ von 53-57 Gew.-%, Al₂O₃ von 12-15 Gew.-%, CaO + MgO von 22-26 Gew.-%, B₂O₃ von 5-8 Gew.-%, F₂ von 0-0,6 Gew.-%, Na₂O + K₂O < 1 Gew.-% und Unreinheiten. Das Bindemittel basiert vorzugsweise auf Polyacrylat. Additive liegen in < 1 Gew.-%, insbesondere < 0,7 Gew.-% zweckmäßigerweise vor, insbesondere Faserpolymer-Additive (Faser Schlichte: Silan-Klebemittel-Netzmittel) und Restmonomere.

Die Erfindung ist keinesfalls auf Dämmstoffbahnen beschränkt, sondern generell auf Dämmstoffelemente auf Mineralwollbasis anwendbar, wobei das Dämmstoffelement auf eine oder beide Hauptflächen oder über den gesamten Umfang mit der Sperrschicht versehen sein kann, was jeweils anwendungsspezifisch nach Bedarf gewählt wird.

## Patentansprüche

1. Dämmstoffelement aus mit Bindemittel versetzter Mineralwolle, insbesondere zu einer Dämmstoffrolle wickelbare Dämmstoffbahn, welches mindestens auf einer seiner Hauptflächen mit einer hautähnlichen Sperrschicht versehen ist, die durch einen Nassvliesstoff aus Glasfasern und Bindemittel gebildet ist,
**dadurch gekennzeichnet, dass**
die Sperrschicht **dadurch** grifffreundlich und porös ausgebildet und an die Flexibilität der Oberflächenschicht des Dämmstoffelements angepasst ist, indem der mittlere Faserdurchmesser der Sperrschicht im Bereich von 7 bis 20 µm liegt, die Sperrschicht eine Dicke < 1 mm und ein Flächengewicht < 30 g/m² aufweist.

2. Dämmstoffelement nach Anspruch 1,
**dadurch gekennzeichnet, dass**
das Bindemittel der Sperrschicht aus Polyacrylat oder auf der Basis von Polyacrylat gebildet ist.

3. Dämmstoffelement nach Anspruch 1 oder 2,
**dadurch gekennzeichnet, dass**
die Sperrschicht aus Textilfasern auf Glasbasis, vorzugsweise aus E-Glas, insbesondere aus gechoppten Fasern gebildet ist.

4. Dämmstoffelement nach Anspruch 3,
**dadurch gekennzeichnet, dass**
die gechoppten Fasern über die gesamte Fläche des Nassvliesstoffes gleichmäßig verteilt sind.

5. Dämmstoffelement nach einem der vorhergehenden Ansprüche,
**dadurch gekennzeichnet, dass**
der mittlere Faserdurchmesser der Sperrschicht im Bereich von 8 bis 14 µm liegt.

6. Dämmstoffelement nach einem der vorhergehenden Ansprüche,
**dadurch gekennzeichnet, dass**
mittlere Fasergewicht der Fasern der Sperrschicht im Bereich von 0,0007 bis 0,0011 liegt, insbesondere 0,0009 g beträgt.

7. Dämmstoffelement nach einem der vorhergehenden Ansprüche,
**dadurch gekennzeichnet, dass**
die Anzahl der Fasern der Sperrschicht pro Flächeneinheit (cm²) im Bereich von 2000 bis 2200, insbesondere bei circa 2100 Fasern/cm² liegt.

8. Dämmstoffelemente nach einem der vorhergehenden Ansprüche,
**dadurch gekennzeichnet, dass**
die Sperrschicht eine Dicke < 0,5 mm und bevorzugt < 0,2 mm aufweist und insbesondere 0,18 mm beträgt.

9. Dämmstoffelement nach einem der vorhergehenden Ansprüche,
**dadurch gekennzeichnet, dass**
die Sperrschicht mit derart feiner haarnetzartiger Struktur ausgebildet ist, dass die Fasern der von der haarartigen Struktur übergriffenen Oberflächenschicht des Dämmstoffelements gegen ein Ablösen eingekammert sind und dass vorzugsweise die Fasern der Oberfläche der Sperrschicht fest gebunden sind.

10. Dämmstoffelement nach Anspruch 9,
**dadurch gekennzeichnet, dass**
die Netzwerkdichte pro Flächeneinheit auf die Eigenschaften der Faserablösungssicherung abgestellt und auf die Faserlänge der Fasern in der Mineralwolle abgestimmt ist.

11. Dämmstoffelement nach einem der vorhergehenden Ansprüche,
**dadurch gekennzeichnet, dass**
die Haarnetzstruktur der Sperrschicht durch wirr angeordnete Fasern gebildet ist, die im wesentlichen in Richtung der Sperrschichtebene ausgerichtet sind.

12. Dämmstoffelement nach einem der vorhergehenden Ansprüche,
**dadurch gekennzeichnet, dass**
die Kreuzungspunkte der Fasern sowie die Fasererstreckung innerhalb der Sperrschicht im wesentlichen längs der Sperrschichtebene ausgerichtet sind.

13. Dämmstoffelement nach einem der vorhergehenden Ansprüche,
**dadurch gekennzeichnet, dass**
die Dicke der Sperrschicht durch die Dicke der Fasern der Sperrschicht bestimmt ist und weniger als das 25-fache der mittleren Faserdicke entspricht, bevorzugt das 20-fache der mittleren Faserdicke beträgt.

14. Dämmstoffelement nach einem der vorhergehenden Ansprüche,
**dadurch gekennzeichnet, dass**
das Flächengewicht der Sperrschicht im Bereich von 12 bis 16 g/m² liegt.

15. Dämmstoffelement nach einem der vorhergehenden Ansprüche,
**dadurch gekennzeichnet, dass**
die Zugkraft der Sperrschicht in Längsrichtung größer als in Querrichtung ist, bevorzugt im Verhältnis von etwa 3:2 liegt, und insbesondere in Längsrichtung etwa 23 N/50mm und quer etwa 15 N/50mm beträgt.

16. Dämmstoffelement nach einem der vorhergehenden Ansprüche,
**dadurch gekennzeichnet, dass**
die Fasern der Sperrschicht an ihren Kreuzungspunkten bzw. in ihren Kreuzungsbereichen durch schwimmhautähnliche oder knotenblechähnliche Bindemittelabschnitte (räumlich-flächige Aufspannung) verbunden sind.

17. Dämmstoffelement nach einem der vorhergehenden Ansprüche,
**dadurch gekennzeichnet, dass**
die Sperrschicht aus einer Schlempe aus Fasern und Bindemittel (Nassvliesstoff) gebildet ist.

18. Dämmstoffelement nach Anspruch 19,
**dadurch gekennzeichnet, dass**
der Schlempe oder Maische ein Weichmacher, insbesondere Tensid zugegeben ist und zwar in einer Menge bevorzugt von 0,1 bis 0,7 %, insbesondere bevorzugt ≤ 0,2 %, der gegebenenfalls eingefärbt ist.

19. Dämmstoffelement nach einem der vorhergehenden Ansprüche,
**dadurch gekennzeichnet, dass**
die Sperrschicht mit an sich bekannten Markierungen zur Identifizierung des Dämmstoffelements oder zur Bearbeitung des Dämmstoffelements, wie Hilfsschnittlinien zum Abschneiden von Abschnitten, versehen, vorzugsweise bedruckt ist.

20. Dämmstoffelement nach einem der vorhergehende Ansprüche,
**dadurch gekennzeichnet, dass**
die Sperrschicht auf sämtlichen Hauptflächen des Dämmstoffelements insbesondere den beiden Hauptflächen der Dämmstoffbahn vorgesehen ist.

21. Dämmstoffelement nach Anspruch 13 oder 14,
**dadurch gekennzeichnet, dass**
die Sperrschicht über den gesamten Umfang des Dämmstoffelements vorgesehen ist.

22. Dämmstoffelement nach einem der vorhergehenden Ansprüche,
**dadurch gekennzeichnet, dass**
die Sperrschicht mit der Oberflächenschicht des Dämmstoffelements verklebt ist.

23. Dämmstoffelement nach einem der vorhergehenden Ansprüche,
**dadurch gekennzeichnet, dass**
der Bindemittelgehalt innerhalb der Sperrschicht derart eingestellt ist, dass eine für die Fasern der Mineralwolle des Dämmstoffelements undurchdringdichte Schicht gebildet ist, insbesondere höher eingestellt ist als der Bindemittelgehalt der Mineralwolle.

24. Dämmstoffelement nach einem der vorhergehenden Ansprüche,
**dadurch gekennzeichnet, dass**
das Dämmstoffelement eine Rohdichte der Mineralwolle von < 40 kg/m³ aufweist, insbesondere eine Dichte im Bereich von 10 bis 25 kg/m³.

25. Dämmstoffelement nach einem der vorhergehenden Ansprüche,
**dadurch gekennzeichnet, dass**
die Aufkaschierung der Sperrschicht in Folge der Anbindung des in der Mineralwolle befindlichen Bindemittels erfolgt.

26. Dämmstoffelement nach einem der vorhergehenden Ansprüche,
**dadurch gekennzeichnet, dass**
die Sperrschicht eine Verstärkung aufweist, insbesondere eine Faden-, Faser- oder Gitterverstärkung.

27. Dämmstoffelement nach einem der vorherigen Ansprüche,
**dadurch gekennzeichnet, dass**
das Dämmstoffelement eine zur Verlegung als Klemmfilz gerüstete Dämmstoffbahn aus Glaswolle ist, bei der der Klemmfilz durch einen mit Klemmdruckübermaß von der Bahn abgeschnittener und quer zur Bahnlängsrichtung zwischen den Sparren mit Klemmsitz verlegten Längsabschnitt gebildet ist.

28. Verfahren zur Herstellung eines Dämmstoffelements mit Sperrschicht gemäß einem der vorhergehenden Ansprüche,
**dadurch gekennzeichnet, dass**
eine Sperrschicht gebildet wird, indem Mineralwollefasern vorzugsweise gechoppte Textilfasern mit Bindemittel zur Bildung einer Schlempe durchtränkt werden, die Schlempe dann in Art der Papierherstellungstechnik verarbeitet wird, indem die Schlempe über eine Siebpartie geführt wird, um überschüssiges Bindemittel abzuführen und die Schlempe in ein blattartiges Gebilde zu überführen, die Schlempe dann durch eine Pressenpartie geführt wird, wo eine Pressung vorzugsweise über Walzen erfolgt, derart, dass das blattartige Gebilde auf Filmstärkendicke von < 1 mm reduziert wird und ein Ausrichtung der Fasern überwiegend in der Ebene des Sperrschichtfilms erfolgt, wonach dann eine Trocknung bzw. Aushärtung des Sperrschichtfilms erfolgt, und dass die Sperrschicht dann auf ein aus Mineralwolle mit darin versetztem Bindemittel gebildetes Dämmstoffelement, insbesondere Dämmstoffbahn gelegt, und mit dem Dämmstoffelement verbunden wird, wobei der mittlere Faserdurchmesser der Sperrschicht im Bereich von 7 bis 20 µm liegt, die Sperrschicht eine Dicke < 1 mm und ein Flächengewicht < 30 g/m² aufweist.

29. Verfahren nach Anspruch 28,
**dadurch gekennzeichnet, dass**
die Sperrschicht vor Aushärtung des Bindemittels des Mineralwolle-Dämmstoffelements auf mindestens eine seiner Hauptflächen zugeführt und die Anbindung zu der Sperrschicht an das Dämmstoffelement in Folge Aushärtung des Bindemittels innerhalb der Mineralwolle durch oberflächenaktive Anbindung während des Aushärtvorganges erfolgt.

30. Verfahren nach Anspruch 28 oder 29,
**dadurch gekennzeichnet, dass**
die Sperrschicht auf wenigstens eine der Hauptflächen des bereits ausgehärteten Mineralwolle-Dämmstoffelements geführt und mittels eines aufgesprühten Bindemittels verklebt wird.

31. Verfahren nach einem der vorhergehenden Verfahrensansprüche,
**dadurch gekennzeichnet, dass**
die Sperrschicht mit Markierungslinien bedruckt wird und zwar nach Aushärtung der Sperrschicht.

32. Mit Markierungen als Schneidhilfe bedruckte Schicht, insbesondere Sperrschicht für Dämmstoffelemente gemäß vorstehenden Ansprüchen,
**dadurch gekennzeichnet, dass**
die Sperrschicht über die Länge hin mit im Muster abwechselnden modularen Markierungen (16, 17) bedruckt ist, wobei der mittlere Faserdurchmesser der Sperrschicht im Bereich von 7 bis 20 µm liegt, die Sperrschicht eine Dicke < 1 mm und ein Flächengewicht < 30 g/m² aufweist.

33. Schicht nach Anspruch 32,
**dadurch gekennzeichnet, dass**
die Sperrschicht mit quer verlaufenden, insbesondere senkrecht zur Längsrichtung verlaufenden Markierungen (16, 17) in zwei Mustern bedruckt ist, von denen eine Markierung eine durchgehende Markierungslinie und die andere Markierung eine strichlierte Markierungslinie bildet, wobei die beiden Muster regelmäßig abwechselnd der Gestalt angeordnet sind, dass sich jeweils zwischen zwei benachbarten durchgehenden Markierungslinien eine strichlierte Markierungslinie befindet.

34. Schicht nach Anspruch 32 oder 33,
**dadurch gekennzeichnet, dass**
die Markierungslinien (16, 17) jeweils durch eine Vielzahl von in einer Reihe und mit engem Abstand zueinander angeordneten rasterartigen Punkte (18) gebildet sind.

## Claims

1. Insulation element consisting of mineral wool compounded with binder, in particular a web of insulation material which can be wound into a roll and which is provided on at least one of its principal faces with a skin-like barrier layer formed by a wet sheet material consisting of glass fibre and binder,
**characterized in that**
the barrier layer is made porous and easy to handle and adapted to the flexibility of the surface layer of the insulation element by adopting an average barrier-layer fibre diameter in the range of 7 to 20 µm, a barrier-layer thickness of < 1 mm, and a barrier-layer weight per unit area of < 30 g/m².

2. Insulation element according to Claim 1,
**characterized in that**
the binder of the barrier layer is formed from, or based on, polyacrylate.

3. Insulation element according to Claim 1 or Claim 2,
**characterized in that**
the barrier layer is formed from glass-based textile fibre, preferably E-glass, and in particular from chopped fibre.

4. Insulation element according to Claim 3,
**characterized in that**
the chopped fibres are uniformly distributed over the entire surface of the wet sheet material.

5. Insulation element according to any one of the preceding claims,
**characterized in that**
the average fibre diameter of the barrier layer is in the range of 8 to 14 µm.

6. Insulation element according to any one of the preceding claims,
**characterized in that**
the average fibre weight of the fibres of the barrier layer is in the range of 0.0007 to 0.0011, and in particular 0.0009, g.

7. Insulation element according to any one of the preceding claims,
**characterized in that**
the number of fibres per unit area (cm²) of the barrier layer is in the range of 2000 to 2200, and in particular approximately 2100, fibres/cm².

8. Insulation element according to any one of the preceding claims,
**characterized in that**
the barrier layer has a thickness of < 0.5 mm, preferably < 0.2 mm, and in particular 0.18 mm.

9. Insulation element according to any one of the preceding claims,
**characterized in that**
the barrier layer is formed with a fine hairnet-like structure such that the fibres of the surface layer of the insulation element impinged upon by the hair[net]-like structure are trapped and thus prevented from becoming detached, and **in that** preferably the fibres at the surface of the barrier layer are firmly bonded.

10. Insulation element according to Claim 9,
**characterized in that**
the network density per unit of area takes account of the properties required to prevent fibre detachment, and is adapted to the length of the fibres in the mineral wool.

11. Insulation element according to any one of the preceding claims,
**characterized in that**
the hairnet structure of the barrier layer is formed by randomly arranged fibres orientated substantially in the barrier-layer plane.

12. Insulation element according to any one of the preceding claims,
**characterized in that**
the fibre intersections and the extent of the fibres within the barrier layer are orientated substantially along the barrier-layer plane.

13. Insulation element according to any one of the preceding claims,
**characterized in that**
the thickness of the barrier layer is determined by the thickness of the barrier-layer fibres, and corresponds to less than 25 times the average fibre thickness and is preferably 20 times the average fibre thickness.

14. Insulation element according to any one of the preceding claims,
**characterized in that**
the weight per unit area of the barrier layer is in the range of 12 to 16 g/m².

15. Insulation element according to any one of the preceding claims,
**characterized in that**
the tensile [strength] of the barrier layer is greater in the longitudinal direction than in the transverse direction, preferably in a ratio of approximately 3:2, and in particular is approximately 23 N/50mm in the longitudinal direction and approximately 15 N/50mm transversely.

16. Insulation element according to any one of the preceding claims,
**characterized in that**
the fibres of the barrier layer are interconnected at their points of intersection or in their zones of intersection by webbed or gusset-like binder segments (with spatially flat extent).

17. Insulation element according to any one of the preceding claims,
**characterized in that**
the barrier layer is formed from a pulp of fibre and binder (wet sheet stock).

18. Insulation element according to Claim 19 *[sic],*
**characterized in that**
a softening agent, in particular a surface-active agent, optionally pigmented, is added to the pulp or mash in a proportion of preferably 0.1 to 0.7 % and most preferably ≤ 0.2%.

19. Insulation element according to any one of the preceding claims,
**characterized in that**
the barrier layer is provided, and preferably printed, with markings, known in themselves, to identify the insulation element or to guide the user, such as parting lines for cutting off sections of insulation material.

20. Insulation element according to any one of the preceding claims,
**characterized in that**
the barrier layer is provided on all principal faces of the insulation element, and in particular on both principal faces of the insulation material web.

21. Insulation element according to Claim 13 or Claim 14,
**characterized in that**
the barrier layer is provided over the whole extent of the insulation element.

22. Insulation element according to any one of the preceding claims,
**characterized in that**
the barrier layer is bonded to the surface layer of the insulation element.

23. Insulation element according to any one of the preceding claims,
**characterized in that**
the binder content within the barrier layer is sufficiently high to form a layer that is impenetrable by the fibres of the mineral wool of the insulation element, and in particular higher than the binder content of the mineral wool.

24. Insulation element according to any one of the preceding claims,
**characterized in that**
the insulation element has a raw density of mineral wool of < 40 kg/m³, and in particular a density in the range of 10 to 25 kg/m³.

25. Insulation element according to any one of the preceding claims,
**characterized in that**
lamination of the barrier layer is effected by bonding of the binder in the mineral wool.

26. Insulation element according to any one of the preceding claims,
**characterized in that**
the barrier layer has reinforcement, in particular a filament, fibre or mesh reinforcement.

27. Insulation element according to any one of the previous claims,
**characterized in that**
the insulation element is an insulation material web of glass wool prepared for installation as clamping felt where the clamping felt is formed as a length cut from the web with a compression allowance and is installed between the spars with a clamping fit, at right angles to the longitudinal direction of the web.

28. Process for the manufacture of an insulation element with barrier layer according to any one of the preceding claims,
**characterized in that**
a barrier layer is formed by soaking mineral wool fibre, preferably chopped textile fibre, with binder to form a pulp, then processing the pulp as in papermaking technology by leading the pulp over a wire section to remove excess binder and transform the pulp into sheet material, and then leading the pulp through a press section where pressing is performed preferably by rollers so that the sheet material is reduced to film thickness (< 1 mm) and the fibres are orientated predominantly within the plane of the barrier-layer film, after which the barrier-layer film is dried and/or cured; and **in that** the barrier layer is then laid on an insulation element, in particular an insulation material web, formed from mineral wool compounded with binder, and is joined to the insulation element, the average fibre diameter of the barrier layer being in the range of 7 to 20 µm, and the barrier layer having a thickness of < 1 mm and a weight per unit area of < 30 g/m².

29. Process according to Claim 28,
**characterized in that**
the barrier layer [is] led on to at least one of the principal faces of the mineral wool insulation element before the mineral wool binder has set, and bonding [of] the barrier layer to the insulation element ensues due to the setting of the binder within the mineral wool, through surface-active bonding during the setting process.

30. Process according to Claim 28 or Claim 29,
**characterized in that**
the barrier layer is led on to at least one of the principal faces of the mineral wool insulation element after the latter has set, and is bonded on with sprayed-on binder.

31. Process according to any one of the preceding process claims,
**characterized in that**
the barrier layer is printed with marking lines after the barrier layer has been cured.

32. Layer printed with markings as an aid for cutting, in particular a barrier layer for insulation elements according to the foregoing claims,
**characterized in that**
the barrier layer is printed over its length with an alternating pattern of modular markings (16, 17), the average fibre diameter of the barrier layer being in the range of 7 to 20 µm, and the barrier layer having a thickness of < 1 mm and a weight per unit area of < 30 g/m².

33. Layer according to Claim 32,
**characterized in that**
the barrier layer is printed with two patterns of markings (16, 17) running transversely and in particular perpendicularly to the longitudinal direction, one such marking forming a continuous line and the other a broken line, the two patterns regularly alternating so that there is one broken line between every two adjacent continuous lines.

34. Layer according to Claim 32 or Claim 33,
**characterized in that**
each marking line (16, 17) is formed by a multitude of halftone dots (18) arranged in a line with narrow spacing between the dots.

## Revendications

1. Élément de matériau isolant fait de laine minérale additionnée d'un liant, en particulier bande de matériau isolant pouvant être enroulée pour former un rouleau de matériau isolant, lequel élément est pourvu, sur au moins une des ses surfaces principales, d'une couche d'arrêt analogue à une peau, formée d'un non-tissé humide fait de fibres de verre et de liant,
**caractérisé en ce que**
la couche d'arrêt est formée de manière être agréable à manipuler et à être poreuse et de manière à être adaptée à la flexibilité de la couche de surface de l'élément de matériau isolant, le diamètre moyen des fibres de la couche d'arrêt étant dans la gamme de 7 à 20 µm et la couche d'arrêt présentant une épaisseur < 1 mm et une masse surfacique < 30 g/m².

2. Élément de matériau isolant selon la revendication 1,
**caractérisé en ce que**
le liant de la couche d'arrêt est fait de polyacrylate ou est à base de polyacrylate.

3. Élément de matériau isolant selon la revendication 1 ou 2,
**caractérisé en ce que**
la couche d'arrêt est formée de fibres textiles à base de verre, de préférence de verre E, en particulier de fibres hachées.

4. Élément de matériau isolant selon la revendication 3,
**caractérisé en ce que**
les fibres hachées sont réparties de manière uniforme sur toute la surface du non-tissé humide.

5. Élément de matériau isolant selon l'une quelconque des revendications précédentes,
**caractérisé en ce que**
le diamètre moyen des fibres de la couche d'arrêt est dans la gamme de 8 à 14 µm.

6. Élément de matériau isolant selon l'une quelconque des revendications précédentes,
**caractérisé en ce que**
la masse moyenne des fibres de la couche d'arrêt est dans la gamme de 0,0007 à 0,0011 g, en particulier de 0,0009 g.

7. Élément de matériau isolant selon l'une quelconque des revendications précédentes,
**caractérisé en ce que**
le nombre de fibres par unité de surface (cm²) de la couche d'arrêt est dans la gamme de 2 000 à 2 200, en particulier d'environ 2 100 fibres/cm².

8. Élément de matériau isolant selon l'une quelconque des revendications précédentes,
**caractérisé en ce que**
la couche d'arrêt présente une épaisseur < 0,5 mm et de préférence < 0,2 mm et en particulier de 0,18 mm.

9. Élément de matériau isolant selon l'une quelconque des revendications précédentes,
**caractérisé en ce que**
la couche d'arrêt est pourvue d'une structure analogue à une résille fine telle que les fibres de la couche de surface de l'élément de matériau isolant recouvertes par la structure analogue à une résille sont enfermées de manière à empêcher leur détachement et telle que les fibres de la surface de la couche d'arrêt sont de préférence solidement liées.

10. Élément de matériau isolant selon la revendication 9,
**caractérisé en ce que**
la densité par unité de surface de la résille est adaptée aux caractéristiques anti-détachement des fibres et à la longueur des fibres de la laine minérale.

11. Élément de matériau isolant selon l'une quelconque des revendications précédentes,
**caractérisé en ce que**
la structure analogue à une résille de la couche d'arrêt est formée de fibres entremêlées, orientées essentiellement dans le sens du plan de la couche d'arrêt.

12. Élément de matériau isolant selon l'une quelconque des revendications précédentes,
**caractérisé en ce que**
les points d'intersection des fibres ainsi que l'orientation des fibres à l'intérieur de la couche d'arrêt sont essentiellement orientés le long du plan de la couche d'arrêt.

13. Élément de matériau isolant selon l'une quelconque des revendications précédentes,
**caractérisé en ce que**
l'épaisseur de la couche d'arrêt est déterminée par l'épaisseur des fibres de la couche d'arrêt et est inférieure à 25 fois l'épaisseur moyenne des fibres, de préférence égale à 20 fois l'épaisseur moyenne des fibres.

14. Élément de matériau isolant selon l'une quelconque des revendications précédentes,
**caractérisé en ce que**
la masse surfacique de la couche d'arrêt est dans la gamme de 12 à 16 g/m².

15. Élément de matériau isolant selon l'une quelconque des revendications précédentes,
**caractérisé en ce que**
la force de traction de la couche d'arrêt est plus élevée dans le sens longitudinal que dans le sens transversal, de préférence dans un rapport d'environ 3:2, et correspond en particulier, dans le sens longitudinal, à environ 23 N/50 mm, et dans le sens transversal, à environ 15 N/50 mm.

16. Élément de matériau isolant selon l'une quelconque des revendications précédentes,
**caractérisé en ce que**
les fibres de la couche d'arrêt sont liées, au niveau de leurs points d'intersection ou plus particulièrement dans leurs zones d'intersection, par des segments de matière liante analogues à des palmures ou à des goussets d'assemblage (disposition spatiale et en nappe).

17. Élément de matériau isolant selon l'une quelconque des revendications précédentes,
**caractérisé en ce que**
la couche d'arrêt est obtenue à partir d'une bouillie de fibres et de liant (non-tissé humide).

18. Élément de matériau isolant selon la revendication 19,
**caractérisé en ce que**
la bouillie ou pâte est additionnée d'un plastifiant éventuellement coloré, en particulier un tensioactif, et ce, de préférence, à raison de 0,1% à 0,7%, de manière plus particulièrement préférée à raison de ≤ 0,2%.

19. Élément de matériau isolant selon l'une quelconque des revendications précédentes,
**caractérisé en ce que**
la couche d'arrêt est pourvue, de préférence est imprimée, de marquages connus en soi pour identifier l'élément de matériau isolant ou pour façonner l'élément de matériau isolant, telles des lignes de coupe auxiliaires permettant la découpe de segments.

20. Élément de matériau isolant selon l'une quelconque des revendications précédentes,
**caractérisé en ce que**
la couche d'arrêt est prévue sur toutes les surfaces principales de l'élément de matériau isolant, en particulier sur les deux surfaces principales de la bande de matériau isolant.

21. Élément de matériau isolant selon la revendication 13 ou 14,
**caractérisé en ce que**
la couche d'arrêt est prévue sur toute la périphérie de l'élément de matériau isolant.

22. Élément de matériau isolant selon l'une quelconque des revendications précédentes,
**caractérisé en ce que**
la couche d'arrêt et la couche de surface de l'élément de matériau isolant sont collées.

23. Élément de matériau isolant selon l'une quelconque des revendications précédentes,
**caractérisé en ce que**
la teneur en liant à l'intérieur de la couche d'arrêt est ajustée de façon à former une couche impénétrable pour les fibres de laine minérale de l'élément de matériau isolant, en particulier cette teneur en liant est ajustée de façon à être supérieure à la teneur en liant de la laine minérale.

24. Élément de matériau isolant selon l'une quelconque des revendications précédentes,
**caractérisé en ce que**
l'élément de matériau isolant présente une masse volumique apparente de la laine minérale < 40 kg/m³, en particulier une masse volumique dans la gamme de 10 à 25 kg/m³.

25. Élément de matériau isolant selon l'une quelconque des revendications précédentes,
**caractérisé en ce que**
le contrecollage de la couche d'arrêt résulte de l'adhérence du liant contenu dans la laine minérale.

26. Élément de matériau isolant selon l'une quelconque des revendications précédentes,
**caractérisé en ce que**
la couche d'arrêt présente un renforcement, en particulier un renforcement par des filaments, par des fibres ou par un réseau.

27. Élément de matériau isolant selon l'une quelconque des revendications précédentes,
**caractérisé en ce que**
l'élément de matériau isolant est une bande de matériau isolant faite de laine de verre façonnée en un feutre à poser par serrage afin de faciliter la pose, le feutre à poser par serrage étant formé d'un segment longitudinal découpé dans la bande, avec un certain surdimensionnement pour le serrage, et étant posé avec ajustement pressé entre des chevrons, transversalement au sens longitudinal de la bande.

28. Procédé de fabrication d'un élément de matériau isolant comprenant une couche d'arrêt selon l'une des revendications précédentes,
**caractérisé en ce que**
une couche d'arrêt est formée en imprégnant des fibres de laine minérale, de préférence des fibres textiles hachées, avec un liant pour former une bouillie, puis en traitant la bouillie, selon les procédés de la technique de fabrication du papier, par transfert de la bouillie dans une section à tamis afin d'éliminer le liant en excès et transformer la bouillie en une structure analogue à une feuille, puis en guidant la bouillie à travers une section à presses dans laquelle une compression est réalisée, de préférence au moyen de cylindres, si bien que la structure analogue à une feuille est réduite à une épaisseur de film < 1 mm et l'orientation des fibres est établie essentiellement dans le plan du film de couche d'arrêt, et ensuite en séchant ou en durcissant le film de couche d'arrêt et en plaçant la couche d'arrêt sur un élément de matériau isolant, en particulier une bande de matériau isolant, fait de laine minérale additionnée d'un liant, puis en la liant à l'élément de matériau isolant, le diamètre moyen des fibres de la couche d'arrêt étant dans la gamme de 7 à 20 µm et la couche d'arrêt présentant une épaisseur < 1 mm et une masse surfacique < 30 g/m²_{.}

29. Procédé selon la revendication 28,
**caractérisé en ce que**
avant le durcissement du liant de l'élément de matériau isolant fait de laine minérale, la couche d'arrêt est amenée sur au moins une des surfaces principales de celui-ci et la liaison entre la couche d'arrêt et l'élément de matériau isolant résulte du durcissement du liant à l'intérieur de la laine minérale du fait de la tensioactivité pendant le processus de durcissement.

30. Procédé selon la revendication 28 ou 29,
**caractérisé en ce que**
la couche d'arrêt est amenée sur au moins une des surfaces principales de l'élément de matériau isolant fait de laine minérale déjà durci et est collée au moyen d'un liant pulvérisé.

31. Procédé selon l'une quelconque des revendications de procédé précédentes,
**caractérisé en ce que**
la couche d'arrêt est imprimée avec des lignes de marquage et **en ce que** cela est réalisé après le durcissement de la couche d'arrêt.

32. Couche imprimée avec des marquages de repères de découpe, en particulier couche d'arrêt pour éléments de matériau isolant selon l'une quelconque des revendications précédentes,
**caractérisée en ce que**
la couche d'arrêt est imprimée sur toute sa longueur avec des marquages modulaires alternés (16, 17), selon un motif, le diamètre moyen des fibres de la couche d'arrêt étant dans la gamme de 7 à 20 µm et la couche d'arrêt présentant une épaisseur < 1 mm et une masse surfacique < 30 g/m².

33. Couche selon la revendication 32,
**caractérisée en ce que**
la couche d'arrêt est imprimée avec des marquages (16, 17) selon deux motifs s'étendant transversalement au sens longitudinal, en particulier perpendiculairement au sens longitudinal, un marquage étant une ligne de marquage continue et l'autre une ligne de marquage en pointillés, les deux motifs étant disposés selon une alternance régulière de telle sorte qu'une ligne de marquage en pointillés se trouve à chaque fois entre deux lignes de marquage continues adjacentes.

34. Couche selon la revendication 32 ou 33,
**caractérisée en ce que**
les lignes de marquage (16, 17) sont chacune formées d'une pluralité de points de trame (18) alignés et rapprochés les uns des autres.
